# EUROPEAN PATENT SPECIFICATION

(11) **EP 2 174 013 B1**
(45) Date of publication and mention of the grant of the patent: **29.11.2017**
(21) Application number: 08793810.6
(22) Date of filing: 06.08.2008
(51) Int. Cl.: F04D 3/02, F04D 29/02, F03B 3/04, F03B 3/10

(54) **PLASTIC PUMP AND GENERATOR AND METHOD OF MANUFACTURING**
KUNSTSTOFFPUMPE UND GENERATOR SOWIE HERSTELLUNGSVERFAHREN DAFÜR
POMPE EN MATIÈRE PLASTIQUE ET GÉNÉRATEUR, ET LEUR PROCÉDÉ DE FABRICATION

(30) Priority: 06.08.2007 NL 1034232
(43) Date of publication of application: 14.04.2010
(73) Proprietor: Manshanden, Gerardus Augustinus Maria, 1671 LA Medemblik (NL)
(72) Inventor: Manshanden, Gerardus Augustinus Maria, 1671 LA Medemblik (NL)
(74) Representative: Algemeen Octrooi- en Merkenbureau B.V.
(86) International application number: PCT/NL2008/000189
(87) International publication number: WO 2009/020386

(56) References cited:
- FR-A- 1 528 010
- GB-A- 804 289
- GB-A- 1 124 531
- US-A- 4 245 949
- US-A- 6 083 382

## Description

The invention relates to a method for manufacturing a device for pumping a liquid from a lower-lying level to a higher-lying level and/or for generating energy from flow of a liquid from a higher-lying level to a lower-lying level and a device for pumping a liquid from a lower-lying level to a higher-lying level. A pump device of this type is known, for instance from the Netherlands patent 1029915. A generator device of this type is described in the non-prepublished Belgian patent application 20060592.

Such pump devices are for instance applied in pumping stations for pumping water out of polders to surface water at a higher level. Generator devices of the stated type are usually applied in hydropower plants. Both types of device have in common that they are relatively voluminous and costly, and that it is not readily possible to shut them down, for instance for the purpose of maintenance operations.

Pump or generator devices of the described type have heretofore been embodied substantially in steel. In respect of the fact that the components of these devices are by their very nature continuously exposed to water, this steel is preserved with a coating.

It is however found in practice that due to the components moving against each other and due to outside influences the coating can wear away locally, whereby corrosion of the components occurs. In order to prevent this such pump or generator devices must be periodically shut down so as to be inspected and possibly recoated. It is also necessary to shut down the device for repair operations when corrosion is ascertained.

US 6083382 describes an improved pump device and a generator device of the above described type wherein said drawbacks do not occur, or at least do so to lesser extent. In addition, US 6083382 provides a method with which such devices can be manufactured relatively simply and quickly, even when they have large dimensions.

By manufacturing the most important components of the pump or generator device from a plastic a very durable device is obtained which is not corroded by the water flowing along. In order to guarantee the required strength, a fibre reinforced plastic can advantageously be applied. Relatively large devices can also be manufactured quickly and easily at relatively low cost by first manufacturing these components separately and only then fixing them to each other.

A problem with the device and method of US 6083382, however, is that fixing the plastic transporting member in the plastic channel is difficult. According to the invention, this problem is solved by laminating the member with its outer periphery onto the inner periphery of the channel.

The invention is now elucidated on the basis of a number of examples, wherein references made to the accompanying drawing in which corresponding components are designated with reference numerals increased by 100 at a time, and in which:
Fig. 1 shows a partially cross-sectional side view of a pump device according to the invention,
Fig. 2 shows a partially cut-away perspective view of a variant of the pump device of fig. 1,
Fig. 3 is a perspective view according to arrow 111 in fig. 2 with an alternative form of the transporting member,
Fig. 4 is a partially cross-sectional side view of a generator device according to the invention, and
Fig. 5 shows schematically the different steps of the method according to the invention.

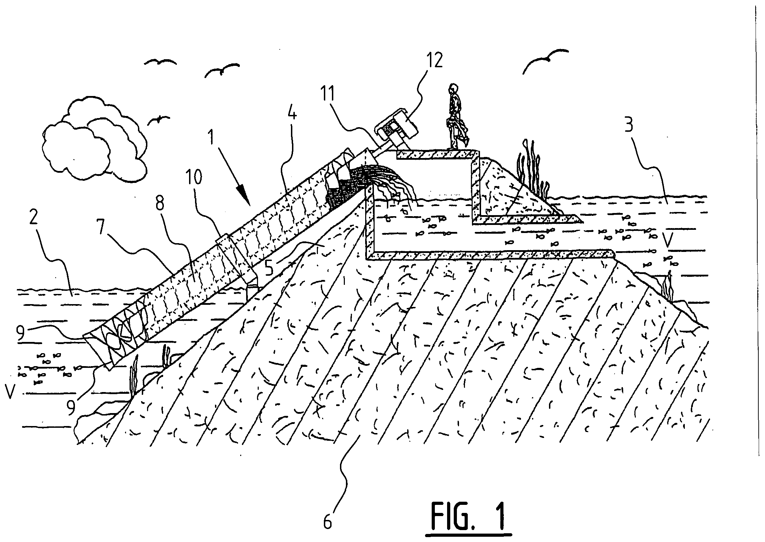

A device 1 (fig. 1) for pumping water from a lower-lying level 2, for instance a polder, to a higher-lying level 3, for instance a belt canal, comprises a channel 4 placed at an angle to the horizontal. This channel 4 is here arranged along the embankment 5 of a dike body 6. A transporting member 7 is arranged in channel 4, which here takes the form of a tube closed on all sides. In this example transporting member 7 takes the form of a core 8 with two continuous blades 9 wound spirally round core 8. The channel or tube 4 and transporting member 7 are formed integrally in the shown example and are together mounted rotatably in a bearing 10. Channel 4 and the transporting member are driven rotatingly by a motor 12 via a shaft 11.

According to the invention both transporting member 7 and channel 4 are manufactured from a plastic. In respect of the high loads which occur, use is preferably made of a plastic composite material, thus a plastic reinforced with fibres, for instance glass fibres, carbon fibres or aramid fibres. All plastics suitable for use in a wet environment, both thermosets and thermoplasts, in particular vinyl esters, polyesters and epoxies, are suitable as matrix material for the composite. In order to enable a relatively rapid construction of transporting member 7 and channel 4, the composite material can be applied in the form of prepregs. Channel 4 and transporting member 7 can in the first instance be manufactured separately and then fitted together and connected to each other.

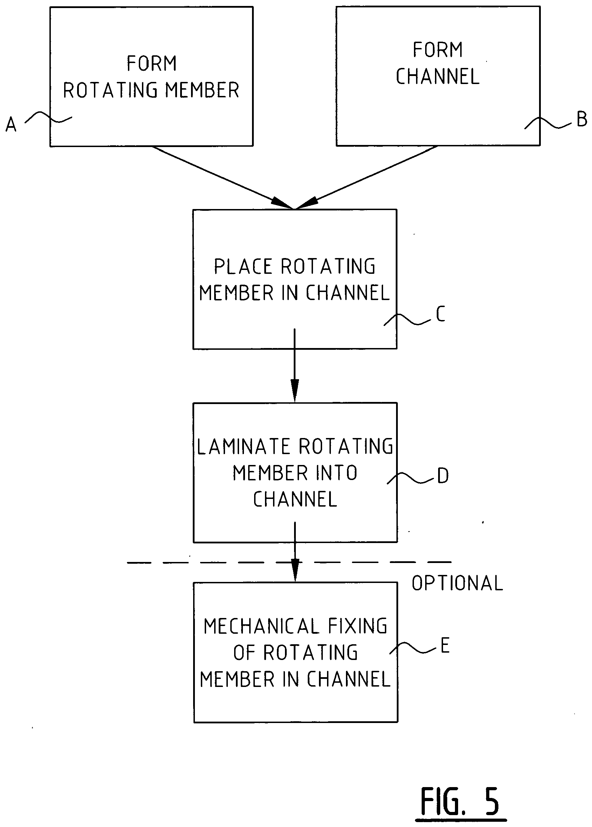

Transporting member 7, which has a relatively complicated form, is preferably formed in a closed mould by means of a vacuum-injection process. The constituents of the plastic are here injected in liquid form into the mould and polymerization takes place therein (fig. 5, block A). Channel 4 can be formed in the same way (fig. 5, block B) although, because channel 4 has a simpler form, other production techniques such as extrusion can also be envisaged. Transporting member 7 is then pushed into channel 4 (block C) and laminated with its outer periphery onto the inner periphery of channel 4 (block D).

This lamination can be local, but preferably takes place over substantially the whole outer periphery of transporting member 7. For this purpose blades 9 can be provided along their outer periphery with one or more flanges which are adhered to the inner periphery of channel 4. Channels or recesses can be formed in these flanges through which adhesive can be introduced between blades 9 and channel 4. This can take place by pressure or by suction, for which purpose an underpressure must be created in the channels.

Particularly when pump device 1 is large, and high loads will thus be exerted on transporting member 7, use can be made for the fixing thereof in channel 4, in addition to or instead of lamination, of mechanical fixing elements such as anchors. These anchors can be inserted radially inward through bores from the outside of channel 4 and fixed to the flanges of blades 9 (block E).

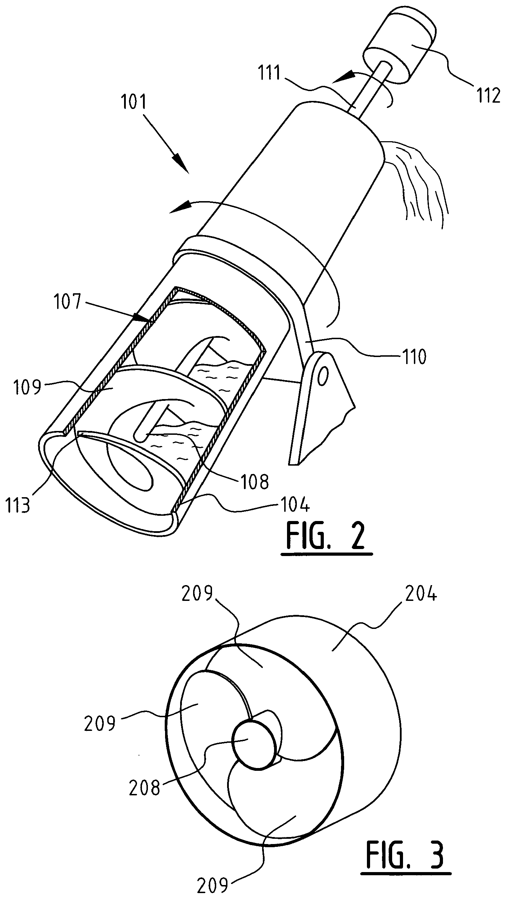

The use of plastics provides great freedom in respect of the design of the different components. Thus shown in fig. 2 is an alternative form of transporting member 107 with a single spiral-shaped blade 109. This is provided on the underside with a tip 113 tapering toward channel 104, whereby the sound emission of pump device 101 is reduced and the risk of injuring or killing fish V is minimized. Core 108 is here clearly thinner than in the first embodiment, thereby creating a larger passage.

In yet another variant of transporting member 207 three blades 209 are arranged around core 208 which extend from core 208 to the wall of the channel or tube 204, and the effective surface area of which increases as seen from core 208 toward the wall.

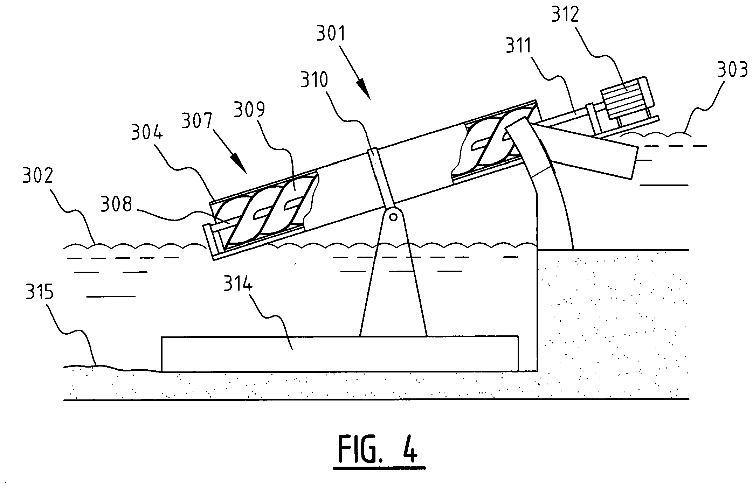

A generator device 301 according to the invention largely corresponds, in respect of construction, to the above shown pump devices. Accommodated in a channel 304 running at an angle is a converting member 307 which is set into rotation by water flowing from a higher-lying level 303 to a lower-lying level 302 (fig. 4). Converting member 307 is here also formed integrally with channel 304, which once again takes the form of a tube closed on all sides. Channel 304 is mounted rotatably in a bearing 310 which in the shown embodiment rests on a plate 314 on the bed 315 of the lower-lying body of water. Converting member 307 is connected via a shaft 311 to take-off means 312, here in the form of an electric generator.

In the shown generator device 301 the converting member 307 and channel 304 are manufactured from a plastic, in particular a fibre-reinforced plastic, such as for instance a vinyl ester reinforced with glass fibres.

By manufacturing a pump device or a generator device largely or even wholly from plastic in the shown manner a very durable device is obtained which, compared to conventional steel devices, requires much less maintenance. The operating costs are thus reduced and operational reliability increased, whereby the pump or generator device can remain almost continuously in operation.

Although the invention is elucidated above on the basis of a number of examples, it will be apparent that it is not limited thereto. More or fewer transporting or converting members than shown here could thus be applied per channel. The form of the transporting or converting members could also be varied.

The channel could also have another cross-section and for instance only partially enclose the transporting or converting member. Finally, the pump and generator function could be combined in a single device.

The scope of the invention is therefore defined solely by the following claims.

## Claims

1. Method for manufacturing a device (1, 101, 201, 301) for pumping a liquid from a lower-lying level to a higher-lying level and/or for generating energy from flow of a liquid from a higher-lying level to a lower-lying level, said device (1, 101, 201, 301) comprising a channel (4, 104, 204, 304) from plastic and a member (7, 107, 207, 307) from plastic arranged therein, which member (7, 107, 207, 307) is provided with a number of blades (9, 109, 209, 309), wherein the member (7, 107, 207, 307) has an outer periphery and the channel (4, 104, 204, 304) has an inner periphery, and wherein the member (7, 107, 207, 307) is fixed with its outer periphery at least locally to the inner periphery of the channel (4, 104, 204, 304), comprising the steps of manufacturing the member (7, 107, 207, 307) from plastic and manufacturing the channel (4, 104, 204, 304) from plastic, and installing and fixing the member (7, 107, 207, 307) in the channel (4, 104, 204, 304), **characterized by** laminating the member (7, 107, 207, 307) with its outer periphery onto the inner periphery of the channel (4, 104, 204, 304).

2. Method as claimed in claim 1, **characterized in that** adhesive is forced by means of suction or pressure between the outer periphery of the member (7, 107, 207, 307) and the inner periphery of the channel (4, 104, 204, 304).

3. Method as claimed in ant of the claims 1 or 2, **characterized in that** the member (7, 107, 207, 307) is formed in a closed mould.

4. Method as claimed in claim 3, **characterized in that** the member (7, 107, 207, 307) is formed by means of a vacuum-injection process.

5. Method as claimed in any of the claims 1-4, **characterized in that** the member (7, 107, 207, 307) is formed as a continuous spiral with a flange on its outer side.

6. Method as claimed in any of the claims 1-5, **characterized in that** the member (7, 107, 207, 307) is fixed in the channel (4, 104, 204, 304) by means of a number of mechanical fixing elements which are inserted radially inward from the outer side of the channel (4, 104, 204, 304).

7. Method as claimed in any of the claims 1-6, **characterized in that** the at least one member (7, 107, 207, 307) and the channel (4, 104, 204, 304) are manufactured from a similar plastic.

8. Method as claimed in any of the claims 1-7, **characterized in that** the at least one member (7, 107, 207, 307) and/or the channel (4, 104, 204, 304) is/are manufactured from a plastic reinforced with fibres.

9. Device (1, 101, 201) for pumping a liquid from a lower-lying level to a higher-lying level, manufactured by the method as claimed in any of the claims 1-8, wherein said channel (4, 104, 204) is running at an angle to the horizontal and said member (7, 107, 207) arranged therein is driven rotatably about a shaft for the purpose of transporting the liquid.

10. Device (301) for generating energy from flow of a liquid from a higher-lying level to a lower-lying level, manufactured by the method as claimed in any of the claims 1-8, wherein said channel (304) is running at an angle to the horizontal, and said member (307) is a converting member and is to be set into rotation by the liquid flow, further comprising a generator (312) connected to the converting member (307).

## Patentansprüche

1. Verfahren zum Herstellen einer Vorrichtung (1, 101, 201, 301) zum Pumpen einer Flüssigkeit von einem niedriger liegenden Niveau zu einem höher liegenden Niveau und/oder zum Erzeugen von Energie aus dem Fließen einer Flüssigkeit von einem höher liegenden Niveau zu einem niedriger liegenden Niveau, wobei die Vorrichtung (1, 101, 201, 301) einen Kanal (4, 104, 204, 304) aus Kunststoff und ein darin angeordnetes Teil (7, 107, 207, 307) aus Kunststoff umfasst, wobei das Teil (7, 107, 207, 307) mit einer Mehrzahl von Schaufeln (9, 109, 209, 309) versehen ist, wobei das Teil (7, 107, 207, 307) einen äußeren Umfang und der Kanal (4, 104, 204, 304) einen inneren Umfang aufweisen, und wobei das Teil (7, 107, 207, 307) mit seinem äußeren Umfang zumindest lokal an dem inneren Umfang des Kanals (4, 104, 204, 304) befestigt ist, umfassend die Schritte des Herstellens des Teils (7, 107, 207, 307) aus Kunststoff und des Herstellens des Kanals (4, 104, 204, 304) aus Kunststoff und des Installierens und des Befestigens des Teils (7, 107, 207, 307) in dem Kanal (4, 104, 204, 304), **gekennzeichnet durch** das Laminieren des Teils (7, 107, 207, 307) mit seinem äußeren Umfang auf den inneren Umfang des Kanals (4, 104, 204, 304).

2. Verfahren nach Anspruch 1, **dadurch gekennzeichnet, dass** Klebstoff durch Saugen oder Druck zwischen den äußeren Umfang des Teils (7, 107, 207, 307) und den inneren Umfang des Kanals (4, 104, 204, 304) getrieben wird.

3. Verfahren nach einem der Ansprüche 1 oder 2, **dadurch gekennzeichnet, dass** das Teil (7, 107, 207, 307) in einer geschlossenen Form gebildet wird.

4. Verfahren nach Anspruch 3, **dadurch gekennzeichnet, dass** das Teil (7, 107, 207, 307) durch ein Vakuum-Injektionsverfahren gebildet wird.

5. Verfahren nach einem der Ansprüche 1 bis 4, **dadurch gekennzeichnet, dass** das Teil (7, 107, 207, 307) als eine kontinuierliche Spirale mit einem Flansch an seiner Außenseite gebildet wird.

6. Verfahren nach einem der Ansprüche 1 bis 5, **dadurch gekennzeichnet, dass** das Teil (7, 107, 207, 307) in dem Kanal (4, 104, 204, 304) durch eine Mehrzahl von mechanischen Befestigungselementen befestigt wird, die radial einwärts von der Außenseite des Kanals (4, 104, 204, 304) eingefügt werden.

7. Verfahren nach einem der Ansprüche 1 bis 6, **dadurch gekennzeichnet, dass** das mindestens eine Teil (7, 107, 207, 307) und der Kanal (4, 104, 204, 304) aus einem gleichartigen Kunststoff hergestellt werden.

8. Verfahren nach einem der Ansprüche 1 bis 7, **dadurch gekennzeichnet, dass** das mindestens eine Teil (7, 107, 207, 307) und/oder der Kanal (4, 104, 204, 304) aus einem mit Fasern verstärkten Kunststoff hergestellt werden.

9. Vorrichtung (1, 101, 201) zum Pumpen einer Flüssigkeit von einem niedriger liegenden Niveau zu einem höher liegenden Niveau, hergestellt nach dem Verfahren nach einem der Ansprüche 1 bis 8, wobei der Kanal (4, 104, 204) mit einem Winkel zur Horizontalen verläuft und das darin angeordnetes Teil (7, 107, 207) um eine Welle rotierbar angetrieben ist, um die Flüssigkeit zu fördern.

10. Vorrichtung (301) zum Erzeugen von Energie aus dem Fließen einer Flüssigkeit von einem höher liegenden Niveau zu einem niedriger liegenden Niveau, hergestellt nach dem Verfahren nach einem der Ansprüche 1 bis 8, wobei der Kanal (304) mit einem Winkel zur Horizontalen verläuft und das Teil (307) ein Wandlerteil ist und durch das Fließen der Flüssigkeit in Rotation zu bringen ist, weiterhin umfassend einen mit dem Wandler (307) verbundenen Generator (312).

## Revendications

1. Procédé de fabrication d'un dispositif (1, 101, 201, 301) pour pomper un liquide d'un niveau inférieur à un niveau supérieur et/ou pour générer de l'énergie à partir d'un écoulement d'un liquide d'un niveau supérieur à un niveau inférieur, ledit dispositif (1, 101, 201, 301) comprenant un canal (4, 104, 204, 304) en matière plastique et un élément (7, 107, 207, 307) en matière plastique agencé dedans, lequel élément (7, 107, 207, 307) est muni d'un certain nombre de pales (9, 109, 209, 309), où l'élément (7, 107, 207, 307) a une périphérie externe et le canal (4, 104, 204, 304) a une périphérie interne, et où l'élément (7, 107, 207, 307) est fixé avec sa périphérie externe au moins localement à la périphérie interne du canal (4, 104, 204, 304), comprenant les étapes qui consistent à fabriquer l'élément (7, 107, 207, 307) à partir de matière plastique et à fabriquer le canal (4, 104, 204, 304) à partir de matière plastique, et à installer et à fixer l'élément (7, 107, 207, 307) dans le canal (4, 104, 204, 304), **caractérisé par** la stratification de l'élément (7, 107, 207, 307) avec sa périphérie externe sur la périphérie interne du canal (4, 104, 204, 304).

2. Procédé tel que revendiqué dans la revendication 1, **caractérisé en ce qu'**un adhésif est forcé par aspiration ou pression entre la périphérie externe de l'élément (7, 107, 207, 307) et la périphérie interne du canal (4, 104, 204, 304).

3. Procédé tel que revendiqué dans l'une des revendications 1 et 2, **caractérisé en ce que** l'élément (7, 107, 207, 307) est formé dans un moule fermé.

4. Procédé tel que revendiqué dans la revendication 3, **caractérisé en ce que** l'élément (7, 107, 207, 307) est formé par un procédé d'injection sous vide.

5. Procédé tel que revendiqué dans l'une des revendications 1 à 4, **caractérisé en ce que** l'élément (7, 107, 207, 307) est formé en spirale continue avec une bride sur son côté externe.

6. Procédé tel que revendiqué dans l'une des revendications 1 à 5, **caractérisé en ce que** l'élément (7, 107, 207, 307) est fixé dans le canal (4, 104, 204, 304) au moyen d'un certain nombre d'éléments de fixation mécanique qui sont insérés radialement vers l'intérieur à partir du côté externe du canal (4, 104, 204, 304).

7. Procédé tel que revendiqué dans l'une des revendications 1 à 6, **caractérisé en ce que** l'au moins un élément (7, 107, 207, 307) et le canal (4, 104, 204, 304) sont fabriqués à partir d'une matière plastique similaire.

8. Procédé tel que revendiqué dans l'une des revendications 1 à 7, **caractérisé en ce que** l'au moins un élément (7, 107, 207, 307) et/ou le canal (4, 104, 204, 304) est/sont fabriqué(s) à partir d'une matière plastique renforcée de fibres.

9. Dispositif (1, 101, 201) pour pomper un liquide d'un niveau inférieur à un niveau supérieur, fabriqué par le procédé tel que revendiqué dans l'une des revendications 1 à 8, dans lequel ledit canal (4, 104, 204) s'étend selon un angle par rapport à l'horizontale et ledit élément (7, 107, 207) agencé dedans est entraîné en rotation autour d'un arbre afin de transporter le liquide.

10. Dispositif (301) pour générer de l'énergie à partir de l'écoulement d'un liquide d'un niveau supérieur à un niveau inférieur, fabriqué par le procédé tel que revendiqué dans l'une des revendications 1 à 8, dans lequel ledit canal (304) s'étend selon un angle par rapport à l'horizontale, et ledit élément (307) est un élément de conversion et doit être mis en rotation par l'écoulement de liquide, comprenant en outre un générateur (312) relié à l'élément de conversion (307).
